# FASCICULE DE BREVET EUROPEEN

(11) **EP 1 428 462 B1**
(45) Date de publication et mention de la délivrance du brevet: **05.04.2006**
(21) Numéro de dépôt: 03356025.1
(22) Date de dépôt: 14.02.2003
(51) Int. Cl.: A47J 27/05

(54) **Cuiseur vapeur a encombrement reduit**
Dampfkochtopf mit reduziertem Platzbedarf
Steam cooker with reduced space requirement

(30) Priorité: 10.12.2002 FR 0215591
(43) Date de publication de la demande: 16.06.2004
(73) Titulaire: SEB S.A., 69130 Ecully (FR)
(72) Inventeur: Dumoux, Philippe, 21120 Gemeaux (FR); Vuillemot Ducarme, Valérie, 21380 Messigny et Vantoux (FR); Pretre, Nicolas, 21000 Dijon (FR)
(74) Mandataire: Kiehl, Hubert

(56) Documents cités:
- EP-A- 1 057 437
- DE-B- 1 253 879
- DE-U- 9 321 150
- US-A- 5 226 552

## Description

La présente invention concerne le domaine technique des appareils de cuisson à la vapeur. Un tel cuiseur vapeur est connu par le document DE 9321 150.

Les cuiseurs vapeur comportent une enceinte de cuisson disposée sur une base de production de vapeur. La base de production de vapeur peut disposer ou non d'un moyen de chauffage autonome de l'eau. L'enceinte de cuisson comporte généralement un ou plusieurs récipients de cuisson superposés, fermés par un couvercle. Les récipients de cuisson comportent un fond présentant des perforations pour le passage de la vapeur, ainsi qu'une paroi latérale périphérique. Le fond des récipients de cuisson peut être amovible pour obtenir une enceinte de cuisson de taille plus importante. Le cas échéant, un bac récupérateur de jus peut être disposé sous un récipient de cuisson.

Pour réduire l'encombrement de tels appareils, il est connu d'utiliser des récipients de cuisson superposés gigognes. Lors de la cuisson, la taille des récipients de cuisson croît de la base vers le sommet de l'appareil. Pour le rangement, l'ordre des récipients de cuisson est inversé et la taille des récipients de cuisson décroît de la base vers le sommet. Cette disposition permet de réduite la hauteur de l'appareil en position de rangement. Toutefois la hauteur de l'appareil en position de rangement reste supérieure à celle d'un appareil ne comportant qu'un seul récipient de cuisson.

Pour obtenir un rangement encore plus compact, il a été proposé de réaliser un cuiseur vapeur à bols gigognes dans lequel la base de production de vapeur peut être rangée dans le bol de cuisson le plus petit. Cette disposition présente toutefois l'inconvénient de placer dans un récipient de cuisson la partie inférieure de la base habituellement en contact avec le plan de travail. Il est donc nécessaire de soulever la base de l'appareil, qui peut contenir encore de l'eau. De plus, le cordon électrique issu de la base de l'appareil gêne le rangement. En outre, l'appareil disposé en position de rangement repose sur la partie inférieure d'un bol de cuisson. Ces dispositions sont particulièrement contraignantes en termes de rangement et de nettoyage, et risquent d'entraîner des problèmes de propreté si l'utilisateur n'est pas suffisamment vigilant.

Le but de la présente invention est de proposer un cuiseur vapeur présentant une configuration de rangement particulièrement compacte.

Un autre but de la présente invention est de proposer un cuiseur vapeur présentant une configuration de rangement particulièrement compacte, sans nécessiter de manipulations contraignantes.

Un autre but de la présente invention est de proposer un cuiseur vapeur présentant une configuration de rangement particulièrement compacte, sans nécessiter de contraintes de nettoyage particulières.

Ces buts sont atteints avec un cuiseur vapeur comprenant un élément de cuisson comportant une paroi latérale périphérique, destiné à être placé sur un socle comportant une base de production de vapeur surmontée le cas échéant d'un récipient récupérateur de jus et/ou d'un support de cuisson, du fait que l'élément de cuisson peut être disposé en position retournée sur le socle, la paroi latérale périphérique enveloppant au moins partiellement le socle. Une telle construction permet d'obtenir une configuration de rangement particulièrement compacte. De plus l'utilisateur n'a pas besoin de manipuler le socle du cuiseur vapeur pour obtenir cette configuration. L'élément de cuisson peut comporter un fond pour former un récipient de cuisson. Le fond du récipient de cuisson peut être amovible. L'élément de cuisson peut aussi être dépourvu de fond. Un support de cuisson est alors disposé entre l'élément de cuisson et la base de production de vapeur. Le support de cuisson peut occuper une hauteur très réduite.

Avantageusement alors, l'élément de cuisson comporte un fond reposant sur le socle lorsque l'élément de cuisson est disposé en position retournée sur ledit socle. Cette disposition permet d'éviter un contact des parois latérales de l'élément de cuisson avec le plan de travail. Cette disposition permet également d'éviter un coincement des parois latérales de l'élément de cuisson avec les parois latérales du socle du cuiseur vapeur. L'élément de cuisson forme un récipient de cuisson.

Le cuiseur vapeur peut avantageusement comporter plusieurs éléments de cuisson superposés comportant chacun une paroi latérale périphérique, ces éléments de cuisson étant gigognes pour obtenir un rangement compact. L'élément de cuisson le plus petit est disposé sur le socle, et les autres éléments sont superposés par taille croissante. L'élément de cuisson placé en position supérieure est l'élément de cuisson le plus grand. Ainsi les éléments de cuisson peuvent être retournés les uns sur les autres pour le rangement.

Avantageusement le cuiseur vapeur comprend un couvercle prévu pour fermer l'élément de cuisson le plus éloigné du socle, le couvercle comportant une jupe apte à envelopper la partie inférieure de la paroi latérale périphérique dudit élément de cuisson disposé en position retournée. Cette disposition permet de protéger le fond de l'élément de cuisson supérieur retourné sur un autre récipient, ou le fond de l'élément de cuisson unique retourné sur le socle du cuiseur vapeur, tout en conservant une bonne compacité. En outre cette disposition permet d'éviter l'entrée de la poussière dans le ou les éléments de cuisson ainsi que dans le socle.

Avantageusement alors pour une meilleure stabilité du couvercle, la jupe prend appui sur la partie inférieure de la paroi latérale périphérique dudit élément de cuisson disposé en position retournée.

Avantageusement encore le récipient récupérateur de jus comporte des renfoncements latéraux destinés à faciliter la préhension.

Avantageusement encore des organes de préhension sont disposés sur la partie supérieure du ou des éléments de cuisson. Cette disposition permet de conserver un empilage compact tout en facilitant la préhension du ou des éléments de cuisson.

Avantageusement encore le socle comporte un dispositif de remplissage escamotable. Cette disposition permet de concilier la compacité du rangement avec la facilité de remplissage.

Avantageusement alors le dispositif de remplissage escamotable est agencé sous le récipient récupérateur de jus. Cette disposition permet une meilleure compacité qu'un agencement dans la base chauffante. En effet, l'agencement sous le récipient récupérateur de jus n'occupe qu'une partie de la surface du récipient récupérateur de jus alors qu'un agencement dans la base chauffante condamne l'ensemble de la surface de la base chauffante sur une hauteur donnée, du fait des problèmes d'étanchéité contrariant un remplissage jusqu'au niveau du dispositif de remplissage escamotable. De ce fait, à capacité de réservoir d'eau égale, l'agencement du dispositif de remplissage escamotable sous le récipient récupérateur de jus permet une hauteur moins importante.

Avantageusement alors le dispositif de remplissage escamotable est agencé sous une partie surélevée du fond du récipient récupérateur de jus. Cette disposition permet d'optimiser l'encombrement du récipient récupérateur de jus sans affecter sa capacité.

Selon une forme de réalisation avantageuse le dispositif de remplissage escamotable comporte un tiroir agencé sous le fond du récipient récupérateur de jus. Selon une autre forme de réalisation avantageuse le dispositif de remplissage escamotable peut comporter une paroi latérale mobile formant une goulotte de remplissage. La paroi latérale est par exemple mobile selon un axe de rotation horizontal.

Avantageusement encore le tiroir est monté pivotant sous le fond du récipient récupérateur de jus selon un axe de rotation. D'autres formes de réalisation telles qu'un tiroir monté coulissant sont également envisageables.

Avantageusement, une paroi latérale annulaire extérieure du socle entoure un bol à riz disposé en position retournée sur le socle. Cette disposition permet de conserver une bonne compacité en position de rangement malgré le rangement d'un accessoire supplémentaire.

Avantageusement alors le bol à riz comporte une poignée logée au dessus de la partie surélevée du fond du récipient récupérateur de jus. Cette disposition permet de concilier compacité et facilité de préhension.

Avantageusement alors, pour faciliter l'implantation du dispositif de remplissage, la poignée est issue d'une face latérale du bol à riz, ladite face latérale étant incurvée vers l'intérieur du bol à riz.

Selon une forme de construction, l'élément de cuisson disposé en position retournée sur le socle repose sur le bol à riz.

Avantageusement encore la base comporte des organes de préhension.

L'invention sera mieux comprise à l'étude de trois exemples de réalisation et d'une variante, pris à titre nullement limitatif, et illustrés dans les figures annexées, dans lesquelles :
- la figure 1 est une vue de face en coupe d'un premier exemple de réalisation d'un cuiseur vapeur selon l'invention, dont le socle comporte une base chauffante et un récipient récupérateur de jus, ce cuiseur vapeur étant représenté dans sa position d'utilisation,
- la figure 2 est une vue de face en coupe du premier exemple de réalisation d'un cuiseur vapeur selon l'invention, représenté dans sa position de rangement.
- la figure 3 est une vue de côté en coupe du premier exemple de réalisation d'un cuiseur vapeur selon l'invention, représenté dans sa position de rangement sans les récipients de cuisson supérieurs ni le couvercle.
- la figure 4 est une vue de face en coupe d'une variante du premier exemple de réalisation d'un cuiseur vapeur selon l'invention, dans laquelle le socle comporte seulement une base chauffante.
- la figure 5 est une vue de face en coupe d'un deuxième exemple de réalisation d'un cuiseur vapeur selon l'invention, dont le socle comporte une base chauffante et un support de cuisson, ce cuiseur vapeur étant représenté dans sa position d'utilisation,
- la figure 6 est une vue de face en coupe du deuxième exemple de réalisation d'un cuiseur vapeur selon l'invention, représenté dans sa position de rangement,
- la figure 7 est une vue de face en coupe d'un troisième exemple de réalisation d'un cuiseur vapeur selon l'invention, ce cuiseur vapeur étant représenté dans sa position de rangement,
- la figure 8 est une vue de dessus d'un bol à riz disposé dans le récipient récupérateur de jus du troisième exemple de réalisation d'un cuiseur vapeur selon l'invention, représentés en position de rangement.

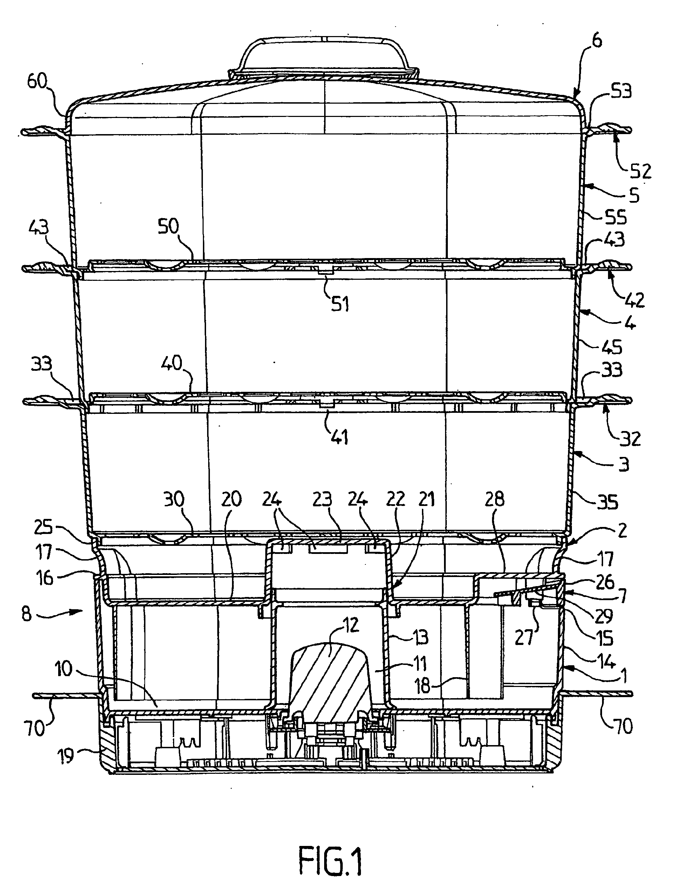

La figure 1 montre un cuiseur vapeur comprenant une base de production de vapeur 1, un récipient récupérateur de jus 2, des éléments de cuisson 3, 4, 5, et un couvercle 6, agencés de manière superposée.

La base 1 comprend un réservoir d'eau 10 communiquant avec une chambre d'ébullition 11 dans laquelle est agencé un élément chauffant 12. Une couronne 13 délimite le réservoir 10 et la chambre 11. La base 1 présente une paroi latérale extérieure 14. Le réservoir d'eau 10 est monté sur une embase 19. Les parties électriques de l'appareil sont logées dans l'embase 19. Des organes de préhension 70 sont disposés sur la paroi latérale 14 de la base 1. Les organes de préhension 70 sont formés par deux poignées diamétralement opposées issues de l'embase 19. Les organes de préhension 70 sont proéminents par rapport à la paroi latérale 14.

Le récipient récupérateur de jus 2 disposé sur la base 1 présente un fond 20 prévu pour recueillir les jus de cuisson ou les condensats s'écoulant des éléments de cuisson 3, 4 , 5. Une cheminée 21 issue du fond 20 présente des parois latérales 22 et un toit 23. Les parois latérales 22 présentent dans leur partie supérieure des perforations 24 prévues pour le passage de la vapeur issue de la chambre d'ébullition 11. Une paroi latérale annulaire extérieure 25 entoure le fond 20. La hauteur de la cheminée 21 est inférieure à la hauteur de la paroi latérale annulaire extérieure 25.

Le récipient récupérateur de jus 2 comporte un dispositif de remplissage 7 du réservoir 10. Le dispositif de remplissage 7 est escamotable. Le dispositif de remplissage 7 comprend un tiroir 26 monté sous le fond 20 du récipient récupérateur de jus 2. Le tiroir 26 est monté pivotant selon un axe de rotation 27. L'axe 27 est issu de la face inférieure du fond 20. Le tiroir 26 est disposé sous une partie surélevée 28 du fond 20. Plus particulièrement, l'axe 27 est issu de la partie surélevée 28. Le tiroir 26 présente une paroi de fond 29 inclinée vers l'intérieur du réservoir 10, de manière à favoriser l'écoulement de l'eau dans le réservoir 10. La paroi latérale extérieure 14 de la base 1 présente une échancrure supérieure 15 prévue pour loger le tiroir 26. Une jupe 18 est ménagée sous le fond 20 du récipient récupérateur de jus 2. Le dispositif de remplissage 7 est disposé à l'extérieur de la jupe 18.

Le récipient récupérateur de jus 2 présente une nervure latérale annulaire extérieure 16 reposant sur la base de production de vapeur 1. La paroi latérale annulaire extérieure 25 présente au dessus de la nervure 16 des renfoncements latéraux 17 destinés à faciliter la préhension du récipient récupérateur de jus 2.

Chacun des éléments de cuisson 3, 4, 5 présente une paroi latérale périphérique 35, 45, 55. L'élément de cuisson 3 le plus petit présente un fond 30 fixe par rapport à la paroi latérale périphérique 35. L'élément de cuisson médian 4 présente un fond 40 amovible par rapport à la paroi latérale périphérique 45. L'élément de cuisson 5 le plus grand présente un fond 50 amovible par rapport à la paroi latérale périphérique 55. Les éléments de cuisson 3, 4, 5 peuvent former des récipients de cuisson indépendants lorsque les fonds amovibles 40, 50 sont en place. Les éléments de cuisson 3, 4, 5 peuvent également former un récipient de cuisson plus grand lorsque l'un au moins des fonds amovibles 40, 50 est retiré.

Les fonds amovibles 40, 50 comportent des pattes d'accrochage 41, 51 décrites plus en détail dans le document WO 00/30511. Des organes de préhension 32, 42, 52 sont disposés sur la partie supérieure des éléments de cuisson 3, 4, 5. Chacun des organes de préhension 32, 42, 52 est par exemple formé par une collerette extérieure comportant en sa partie supérieure une conformation 33, 43, 53 prévue pour recevoir la partie inférieure d'une jupe 60 du couvercle 6. Ainsi le couvercle 6 peut s'adapter sur chacun des éléments de cuisson 3, 4 , 5.

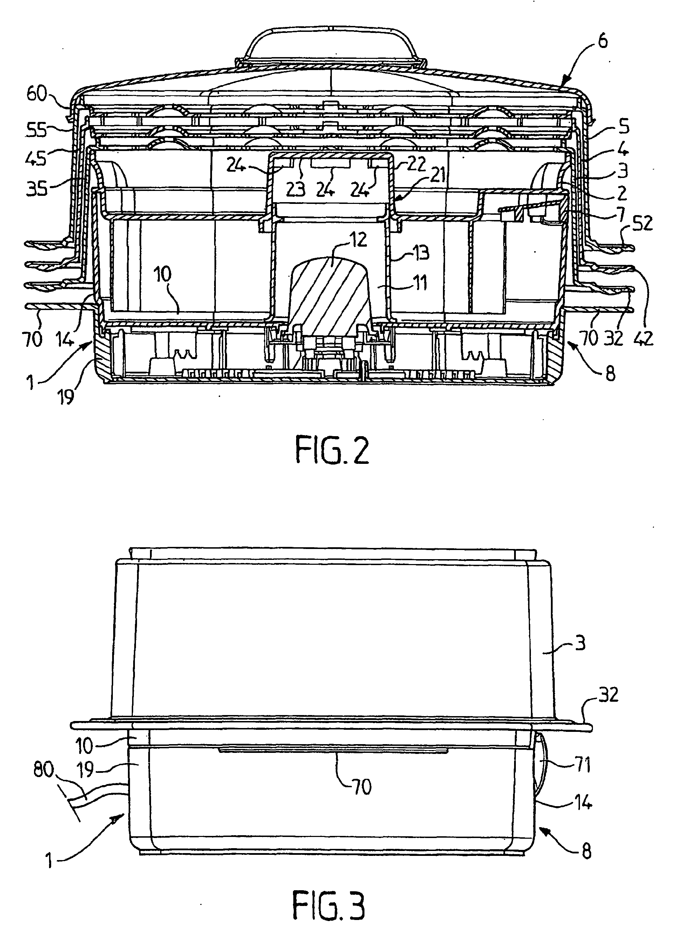

Les éléments de cuisson 3, 4, 5 sont gigognes. Lors de la cuisson, tel que représenté à la figure 1, l'élément de cuisson 5 le plus grand est placé sous le couvercle, l'élément de cuisson 3 le plus petit est placé sur le récipient récupérateur de jus 2, et l'élément de cuisson 4 médian est placé entre les deux autres éléments. Pour le rangement, tel que représenté à la figure 2, l'élément de cuisson 3 le plus petit est placé dans le récipient médian 4 qui est placé dans l'élément de cuisson 5 le plus grand.

Plus particulièrement selon l'invention, l'élément de cuisson 3 le plus petit peut être retourné sur le récipient récupérateur de jus 2 placé sur la base 1. Les éléments de cuisson 4, 5 sont également empilés de façon retournée. Le couvercle 6 est placé sur l'élément de cuisson 5 le plus grand. Ainsi dans la position de rangement de l'appareil, le socle 8 formé par la base 1 et le récipient récupérateur de jus 2 reste en place sur le plan de travail. L'utilisateur n'a pas besoin de manipuler le socle 8 de l'appareil. Seuls les éléments de cuisson 3, 4, 5 sont retournés sur le socle 8, par exemple après avoir été lavés.

Le couvercle 6 peut conserver sa position utilisée lors de la cuisson. La jupe 60 du couvercle 6 est prévue pour envelopper le fond 50 de l'élément de cuisson 5 le plus grand lorsque celui-ci est retourné. Tel que montré à la figure 2, la jupe 60 prend appui sur la partie inférieure de la paroi latérale périphérique 55 de l'élément de cuisson 5 retourné. La paroi latérale périphérique 45 de l'élément de cuisson 4 médian est disposée entre les parois latérales périphériques 35 ; 55 des éléments de cuisson 3 ; 5 lorsque ceux-ci sont retournés. La paroi latérale périphérique 35 de l'élément de cuisson 3 le plus petit est prévue pour envelopper le récipient récupérateur de jus 2 placé sur la base 1 lorsque l'élément de cuisson 3 est retourné. Les organes de préhension 70, 32, 42, 52 sont superposés, ce qui permet à l'utilisateur de déplacer le cuiseur vapeur disposé en position de rangement en maintenant les organes de préhension 70 de la base ainsi que des organes de préhension 32, 42 ou 52 des éléments de cuisson, quel que soit le nombre d'éléments de cuisson 3, 4, 5 disposés sur le socle 8 en position retournée.

Ainsi la paroi latérale périphérique 35 de l'élément de cuisson 3 enveloppe au moins partiellement le socle 8 du cuiseur vapeur.

La base 1 comporte un cordon électrique 80 et une minuterie 71 disposés en dessous de l'élément de cuisson 3 disposé sur le socle 8 en position retournée, tel que visible à la figure 3. Le cordon électrique 80 est issu de l'embase 19. Le cordon électrique 80 peut rester branché même lorsque le cuiseur vapeur est en position de rangement. La minuterie 71 est montée sur la paroi latérale de l'embase 19.

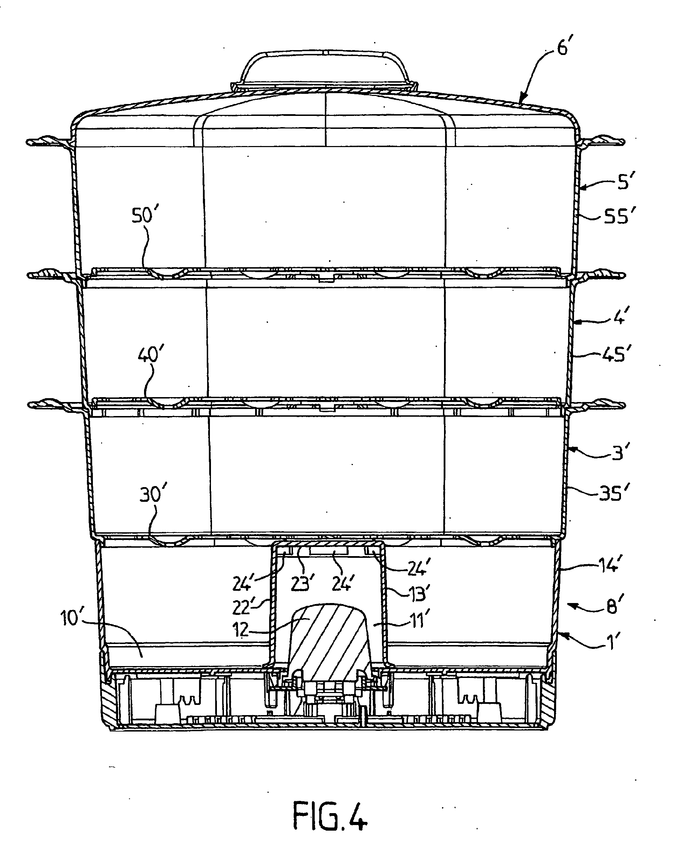

La figure 4 montre un cuiseur vapeur comportant une base de production de vapeur 1', des éléments de cuisson 3', 4', 5', et un couvercle 6', agencés de manière superposée. Cette variante de réalisation diffère de l'exemple de réalisation précédent en ce que le socle 8' du cuiseur vapeur comporte une base de production de vapeur 1' mais pas de récipient récupérateur de jus. L'élément de cuisson inférieur 3' repose sur la base 1'.

La base 1' comprend un réservoir d'eau 10' communiquant avec une chambre d'ébullition 11' dans laquelle est agencé un élément chauffant 12'. Une couronne 13' délimite le réservoir 10' et la chambre 11'. La base 1 présente une paroi latérale extérieure 14'. L'élément de cuisson inférieur 3' comporte une paroi latérale périphérique 35' et un fond 30'. L'élément de cuisson 3' repose sur le sommet de la paroi latérale extérieure 14'. La couronne 13' présente des parois latérales 22' et un toit 23'. Les parois latérales 22' présentent dans leur partie supérieure des perforations 24' prévues pour le passage de la vapeur issue de la chambre d'ébullition 11'. L'élément de cuisson médian 4' comporte une paroi latérale périphérique 45' et un fond 40' amovible. L'élément de cuisson supérieur 5' comporte une paroi latérale périphérique 55' et un fond 50' amovible.

Les éléments de cuisson 3', 4', 5' peuvent être retournés pour occuper une position de rangement sur le socle 8. L'élément de cuisson inférieur 3' est alors retourné sur la base 1'. La paroi latérale périphérique 35' de l'élément de cuisson 3' enveloppe alors au moins partiellement le socle 8' du cuiseur vapeur.

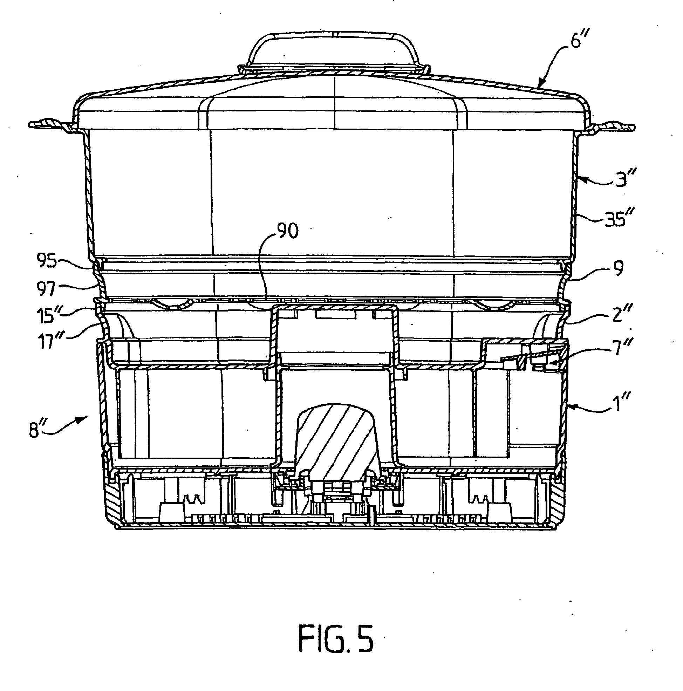

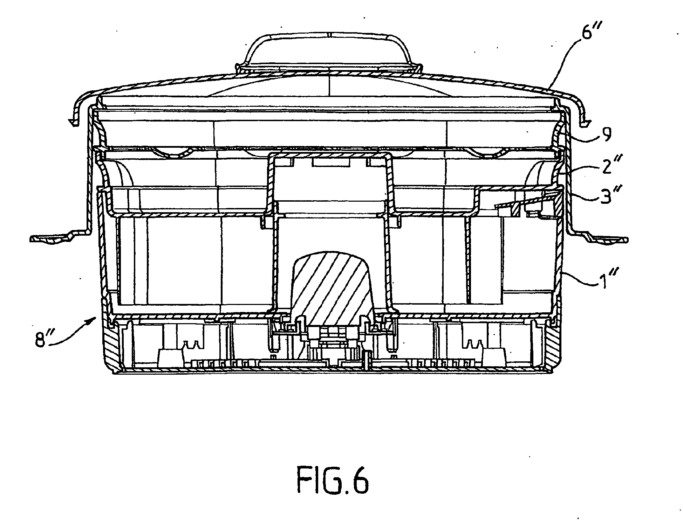

Un autre exemple de réalisation d'un cuiseur vapeur selon l'invention est montré aux figures 5 et 6.

La figure 5 montre un cuiseur vapeur comprenant une base de production de vapeur 1", un récipient récupérateur de jus 2", un support de cuisson 9, un élément de cuisson 3", et un couvercle 6", agencés de manière superposée.

La base de production de vapeur 1 ", le récipient récupérateur de jus 2" et le couvercle 6" sont identiques à la base 1, au récipient récupérateur de jus 2 et au couvercle 6 du premier exemple de réalisation.

Le récipient récupérateur de jus 2" comporte une paroi latérale périphérique 15" munie de renfoncements 17" destinés à faciliter la préhension, ainsi qu'un dispositif de remplissage 7" escamotable.

L'élément de cuisson 3" comporte une paroi latérale périphérique 35" mais est dépourvu de fond destiné à recevoir les aliments à cuire.

Un support de cuisson 9 est agencé entre le récipient récupérateur de jus 2" et l'élément de cuisson 3". Le support de cuisson comporte un fond 90 perforé. Le fond 90 est entouré par une paroi latérale périphérique 95 munie de renfoncements 97 destinés à faciliter la préhension.

Le socle 8" est formé par la base 1 ", le récipient récupérateur de jus 2", et le support de cuisson 9.

La figure 6 représente le cuiseur vapeur en position de rangement. L'élément de cuisson 3" est retourné sur le socle 8". La paroi latérale périphérique 35" de l'élément de cuisson 3" enveloppe au moins partiellement le socle 8" du cuiseur vapeur.

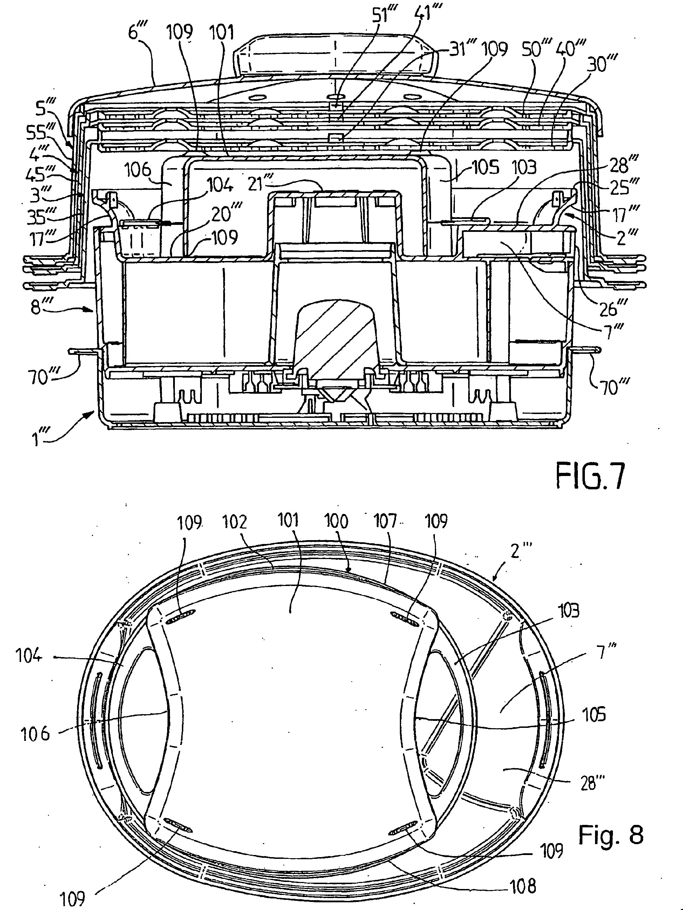

Un troisième exemple de réalisation d'un cuiseur vapeur selon l'invention est montré aux figures 7 et 8.

La figure 7 montre un cuiseur vapeur comprenant une base de production de vapeur 1"', un récipient récupérateur de jus 2"', des éléments de cuisson 3"', 4"', 5"', et un couvercle 6"', agencés de manière superposée.

La base de production de vapeur 1"', le récipient récupérateur de jus 2''' et le couvercle 6"' présentent une construction similaire à celle de la base 1; du récipient récupérateur de jus 2 et du couvercle 6 du premier exemple de réalisation. Les éléments de cuisson 3"', 4"' et 5"' présentent chacun un fond amovible 30"', 40"', 50"' muni de pattes d'accrochage 31"', 41"', 51"', ainsi qu'une paroi latérale périphérique 35"', 45"', 55"'.

Le récipient récupérateur de jus 2"' comporte un fond 20"' entouré par une paroi latérale annulaire extérieure 25"' munie de renfoncements 17"' destinés à faciliter la préhension, ainsi qu'un dispositif de remplissage 7"' escamotable. Le dispositif de remplissage 7"' comprend un tiroir 26"' monté pivotant sous une partie surélevée 28"' du fond 20"' du récipient récupérateur de jus 2"'.

Un bol à riz 100 peut être logé en position retournée dans le récipient récupérateur de jus 2"' autour de la cheminée 21"', tel que montré aux figures 7 et 8. Le bol à riz 100 présente un fond 101 muni de quatre pieds 109. Le fond 101 est surmonté d'une paroi latérale 102 présentant deux poignées 103, 104 disposées de manière opposée. Les poignées 103, 104 sont issues de faces 105, 106 incurvées vers l'intérieur. La poignée 103 et la poignée 104 sont disposées à distance du bord supérieur 109 de la paroi latérale 102. Cette disposition permet de loger la poignée 103 ou la poignée 104 au dessus de la partie surélevée 28'" du fond 20"' du récipient récupérateur à jus 2"'. La paroi latérale 102 comporte deux autres faces 107, 108 bombées vers l'extérieur. Cette disposition permet d'augmenter la capacité du bol à riz 100.

Le socle 8"' est formé par la base 1"' et le récipient récupérateur de jus 2"'. La base 1"' comporte des organes de préhension 70"'.

Dans la position de rangement, l'élément de cuisson 3"' est disposé en position retournée sur le socle 8"'. L'élément de cuisson 3"' repose sur le bol à riz 100 retourné dans le socle 8"'. Le fond 30"' de l'élément de cuisson 3"' repose sur le fond 101 du bol à riz 100, et plus particulièrement sur les pieds 109 du fond 101. Le bol à riz 100 est retourné dans le récipient récupérateur de jus 2"'. La paroi latérale annulaire extérieure 25"' du socle 8"' entoure le bol à riz 100 disposé en position retournée sur le socle 8"'. La paroi latérale périphérique 35"' de l'élément de cuisson 3"' enveloppe partiellement le socle 8"'.

A titre de variante dans l'un ou l'autre des exemples de réalisation, la cheminée 23 pourrait être aussi haute que le sommet de la paroi latérale annulaire extérieure 25 du récipient récupérateur de jus 2.

A titre de variante, le cuiseur vapeur peut comporter plusieurs éléments de cuisson médians, ou aucun, voire un seul élément de cuisson, ce ou ces éléments de cuisson étant prévus pour être retournés sur le socle du cuiseur vapeur. Chaque élément de cuisson peut comporter un fond fixe ou un fond amovible pour recevoir les aliments à cuire, voire pas de fond.

A titre de variante, le ou les fonds amovibles du ou des éléments de cuisson peuvent être rangés sous le couvercle au dessus de la ou des parois latérales périphériques retournées sur le socle. Si le cuiseur vapeur comporte un bol à riz, ledit ou lesdits fonds amovibles peuvent alors le cas échéant reposer sur le bol à riz retourné sur le socle.

A titre de variante, le cuiseur vapeur peut être dépourvu de dispositif de remplissage escamotable, ou encore comporter un dispositif de remplissage escamotable agencé dans la base de production de vapeur.

A titre de variante, le tiroir 26 ; 26" ; 26"' du dispositif de remplissage escamotable 7 ; 7" ; 7"' n'est pas nécessairement pivotant, mais peut par exemple être coulissant.

A titre de variante, l'axe 27 n'est pas nécessairement issu du fond 20 du récipient récupérateur de jus 2, mais peut être formé par une pièce rapportée sous le fond 20 du récipient récupérateur de jus 2.

A titre de variante, le socle du cuiseur vapeur peut comporter une base de production de vapeur et un support de cuisson agencé sur la base, sans comporter de récipient récupérateur de jus.

A titre de variante, la base peut comporter ou non des organes de préhension.

A titre de variante, le bol à riz 100 pourrait être retourné dans la base 1' en l'absence de récipient récupérateur de jus, ou dans le support de cuisson 9. La base 1' présente une paroi latérale annulaire extérieure 14'. Le support de cuisson 9 présente une paroi latérale annulaire extérieure 95.

A titre de variante, l'élément de cuisson 3"' disposé en position retournée sur le socle 8"' ne repose pas nécessairement sur le bol à riz 100.

La présente invention n'est nullement limitée à l'exemple de réalisation décrit et à ses variantes, mais englobe de nombreuses modifications dans le cadre des revendications.

## Revendications

1. Cuiseur vapeur comprenant un élément de cuisson (3 ; 3' ; 3" ; 3"') comportant une paroi latérale périphérique (35 ; 35' ; 35" ; 35"'), destiné à être placé sur un socle (8 ; 8' ; 8" ; 8"') comportant une base de production de vapeur (1 ; 1' ; 1" ; 1"') surmontée le cas échéant d'un récipient récupérateur de jus (2 ; 2" ; 2"') et/ou d'un support de cuisson (9), l'élément de cuisson (3 ; 3' ; 3" ; 3"') pouvant être disposé en position retournée sur le socle (8 ; 8' ; 8" ; 8"'), **caractérisé en ce que** la paroi latérale périphérique (35 ; 35' ; 35" ; 35''') enveloppe au moins partiellement le socle (8, 8' ; 8" ; 8'").

2. Cuiseur vapeur selon la revendication 1, **caractérisé en ce que** l'élément de cuisson (3 ; 3') comporte un fond (30 ; 30') reposant sur le socle (8 ; 8') lorsque l'élément de cuisson (3 ; 3') est disposé en position retournée sur ledit socle (8 ; 8').

3. Cuiseur vapeur selon l'une des revendications 1 ou 2, **caractérisé en ce qu'**il comporte au moins un autre élément de cuisson (4, 5 ; 4' ; 5' ; 4"'; 5"') comportant une paroi latérale périphérique (45, 55 ; 45', 55' ; 45"', 55"'), les éléments de cuisson (3, 4, 5 ; 3', 4', 5' ; 3"', 4"'; 5"') étant gigognes.

4. Cuiseur vapeur selon la revendication 3, **caractérisé en ce qu'**il comporte au moins deux éléments de cuisson (3, 4, 5 ; 3', 4', 5' ; 3"', 4"', 5"') pouvant être agencés de manière superposée sur le socle (8 ; 8' ; 8"') et **en ce que** lesdits au moins deux éléments de cuisson (3, 4, 5 ; 3', 4', 5' ; 3"', 4"', 5"') peuvent aussi être empilés en position retournée sur le socle (8 ; 8' ; 8"'), les parois latérales périphériques (35, 45, 55 ; 35', 45', 55' ; 35"', 45"' ; 55"') enveloppant alors au moins partiellement le socle (8 ; 8' ; 8"').

5. Cuiseur vapeur selon l'une des revendications 1 à 4, **caractérisé en ce qu'**il comprend un couvercle (6 ; 6' ; 6" ; 6"') prévu pour fermer l'élément de cuisson (5 ; 5' ; 3" ; 5"') le plus éloigné du socle (8 ; 8' ; 8" ; 8"'), le couvercle (6 ; 6' ; 6" ; 6"') comportant une jupe (60) apte à envelopper la partie inférieure de la paroi latérale périphérique (55) dudit élément de cuisson (5) disposé en position retournée.

6. Cuiseur vapeur selon la revendication 5, **caractérisé en ce que** la jupe (60) prend appui sur la partie inférieure de la paroi latérale périphérique (55) dudit élément de cuisson (5) disposé en position retournée.

7. Cuiseur vapeur selon l'une des revendications 1 à 6, **caractérisé en ce que** le récipient récupérateur de jus (2 ; 2" ; 2"') comporte des renfoncements latéraux (17 ; 17" ; 17"') destinés à faciliter la préhension.

8. Cuiseur vapeur selon l'une des revendications 1 à 7, **caractérisé en ce que** des organes de préhension (32, 42, 52) sont disposés sur la partie supérieure du ou des éléments de cuisson (3, 4, 5).

9. Cuiseur vapeur selon l'une des revendications 1 à 8, **caractérisé en ce que** le socle (8 ; 8" ; 8"') comporte un dispositif de remplissage (7 ; 7" ; 7''') escamotable.

10. Cuiseur vapeur selon la revendication 9, **caractérisé en ce que** le dispositif de remplissage (7 ; 7" ; 7"') escamotable est agencé sous le récipient récupérateur de jus (2 ; 2" ; 2"').

11. Cuiseur vapeur selon la revendication 10, **caractérisé en ce que** le dispositif de remplissage (7 ; 7"') escamotable est agencé sous une partie surélevée (28 ; 28"') du fond (20 ; 20''') du récipient récupérateur de jus (2 ; 2"').

12. Cuiseur vapeur selon l'une des revendications 10 ou 11, **caractérisé en ce que** le dispositif de remplissage (7 ; 7"') escamotable comporte un tiroir (26 ; 26''') agencé sous le fond (20 ; 20"') du récipient récupérateur de jus (2 ; 2''').

13. Cuiseur vapeur selon la revendication 12, **caractérisé en ce que** le tiroir (26 ; 26''') est monté pivotant sous le fond (20 ; 20"') du récipient récupérateur de jus (2 ; 2"') selon un axe (27).

14. Cuiseur vapeur selon l'une des revendications 1 à 13, **caractérisé en ce qu'**une paroi latérale annulaire extérieure (25"') du socle (8"') entoure un bol à riz (100) disposé en position retournée sur le socle (8"').

15. Cuiseur vapeur selon la revendication 14, **caractérisé en ce qu'**une paroi latérale annulaire extérieure (25"') du socle (8"') entoure un bol à riz (100) est disposé en position retournée sur le socle (8"') et **en ce que** le bol à riz (100) comporte une poignée (103) logée au dessus de la partie surélevée (28"') du fond (20"') du récipient récupérateur de jus (2"').

16. Cuiseur vapeur selon la revendication 15, **caractérisé en ce que** la poignée (103) est issue d'une face latérale (105) du bol à riz (100), ladite face latérale (105) étant incurvée vers l'intérieur du bol à riz (100).

17. Cuiseur vapeur selon l'une des revendications 14 à 16, **caractérisé en ce que** l'élément de cuisson (3"') disposé en position retournée sur le socle (8"') repose sur le bol à riz (100).

18. Cuiseur vapeur selon l'une des revendications 1 à 17, **caractérisé en ce que** la base (1 ; 1"') comporte des organes de préhension (70 ; 70"').

## Patentansprüche

1. Dampfkochtopf mit einem Garelement (3 ; 3' ; 3 ", 3'''), das eine umlaufende Seitenwand (35 ; 35' ; 35", 35"') aufweist und dazu bestimmt ist, auf einen Sockel (8 ; 8' ; 8" ; 8"') gesetzt zu werden, der ein Dampferzeugungsbasisteil (1 ; 1' ; 1"; 1''') aufweist, das gegebenenfalls von einem Saftauffangbehälter (2 ; 2" ; 2''') und/oder einem Garträger (9) überragt ist, wobei das Garelement (3 ; 3'; 3" ; 3''') in umgekehrter Stellung auf dem Sockel (8 ; 8' ; 8" ; 8''') angeordnet sein kann, **dadurch gekennzeichnet, dass** die umlaufende Seitenwand (35 ; 35' ; 35", 35''') den Sockel (8 ; 8' ; 8" ; 8"') wenigstens teilweise umhüllt.

2. Dampfkochtopf nach Anspruch 1, **dadurch gekennzeichnet, dass** das Garelement (3 ; 3') einen Boden (30 ; 30') aufweist, der auf dem Sockel (8 ; 8') aufliegt, wenn das Garelement (3 ; 3') in umgekehrter Stellung auf dem Sockel angeordnet ist.

3. Dampfkochtopf nach einem der Ansprüche 1 oder 2, **dadurch gekennzeichnet, dass** er wenigstens ein weiteres Garelement (4, 5 ; 4', 5'; 4"' ; 5"') mit einer umlaufenden Seitenwand (45, 55 ; 45', 55' ; 45"', 55"') aufweist, wobei die Garelemente (3, 4, 5 ; 3', 4', 5' ; 3"', 4"', 5"') aufeinander stapelbar sind.

4. Dampfkochtopf nach Anspruch 3, **dadurch gekennzeichnet, dass** er wenigstens zwei Garelemente (3, 4, 5 ; 3', 4', 5' ; 3"', 4"', 5"') aufweist, die aufeinander auf dem Sockel (8 ; 8' ; 8"') angeordnet werden können, und dass die wenigstens zwei Garelemente (3, 4, 5 ; 3', 4', 5' ; 3"', 4"', 5"') auch in umgekehrter Stellung auf dem Sockel (8 ; 8' ; 8"') angeordnet werden können, wobei die umlaufenden Seitenwände (35, 45, 55 ; 35', 45', 55' ; 35"', 45"', 55"') den Sockel (8 ; 8' ; 8"') dann wenigstens teilweise umhüllen.

5. Dampfkochtopf nach einem der Ansprüche 1 bis 4, **dadurch gekennzeichnet, dass** er einen Deckel (6 ; 6' ; 6" ; 6"') aufweist, der dazu vorgesehen ist, das am weitesten vom Sockel (8 ; 8' ; 8" ; 8"') entfernte Garelement (5 ; 5' ; 3" ; 5"') zu schließen, wobei der Deckel (6 ; 6' ; 6" ; 6"') eine Schürze (60) aufweist, die dazu geeignet ist, den unteren Teil der umlaufenden Seitenwand (55) des in umgekehrter Stellung angeordneten Garelements (5) zu umhüllen.

6. Dampfkochtopf nach Anspruch 5, **dadurch gekennzeichnet, dass** sich die Schürze (60) auf den unteren Teil der umlaufenden Seitenwand (55) des in umgekehrter Stellung angeordneten Garelements (5) abstützt.

7. Dampfkochtopf nach einem der Ansprüche 1 bis 6, **dadurch gekennzeichnet, dass** der Saftauffangbehälter (2 ; 2" ; 2"') seitliche Vertiefungen (17 ; 17" ; 17"') aufweist, um das Greifen zu erleichtern.

8. Dampfkochtopf nach einem der Ansprüche 1 bis 7, **dadurch gekennzeichnet, dass** Greiforgane (32, 42, 52) auf dem oberen Teil des Garelements oder der Garelemente (3, 4, 5) angeordnet sind.

9. Dampfkochtopf nach einem der Ansprüche 1 bis 8, **dadurch gekennzeichnet, dass** der Sockel (8 ; 8" ; 8"') eine einziehbare Füllvorrichtung (7 ; 7" ; 7''') aufweist.

10. Dampfkochtopf nach Anspruch 9, **dadurch gekennzeichnet, dass** die einziehbare Füllvorrichtung (7 ; 7" ; 7"') unterhalb des Saftauffangbehälters (2 ; 2" ; 2"') angeordnet ist.

11. Dampfkochtopf nach Anspruch 10, **dadurch gekennzeichnet, dass** die einziehbare Füllvorrichtung (7 ; 7" ; 7"') unterhalb eines erhöhten Teils (28 ; 28"') des Bodens (20 ; 20''') des Saftauffangbehälters (2 ; 2"') angeordnet ist.

12. Dampfkochtopf nach einem der Ansprüche 10 oder 11, **dadurch gekennzeichnet, dass** die einziehbare Füllvorrichtung (7 ; 7''') eine Schublade (26 ; 26''') aufweist, die unterhalb des Bodens (20 ; 20''') des Saftauffangbehälters (2 ; 2"') angeordnet ist.

13. Dampfkochtopf nach Anspruch 12, **dadurch gekennzeichnet, dass** die Schublade (26 ; 26''') entlang einer Achse (27) schwenkbar unterhalb des Bodens (20 ; 20''') des Saftauffangbehälters (2 ; 2"') angeordnet ist.

14. Dampfkochtopf nach einem der Ansprüche 1 bis 13, **dadurch gekennzeichnet, dass** eine ringförmige äußere Seitenwand (25''') des Sockels (8"') eine in umgekehrter Stellung auf dem Sockel (8''') angeordnete Reisschale (100) umgibt.

15. Dampfkochtopf nach Anspruch 14, **dadurch gekennzeichnet, dass** eine ringförmige äußere Seitenwand (25''') des Sockels (8"') eine in umgekehrter Stellung auf dem Sockel (8''') angeordnete Reisschale (100) umgibt, und dass die Reisschale (100) einen Griff (103) aufweist, der oberhalb des erhöhten Teils (28"') des Bodens (20''') des Saftauffangbehälters (2"') gelagert ist.

16. Dampfkochtopf nach Anspruch 15, **dadurch gekennzeichnet, dass** der Griff (103) aus einer Seitefläche (105) der Reisschale (100) herausgebildet ist, wobei die Seitenfläche (105) zum Inneren der Reisschale (100) gekrümmt ist.

17. Dampfkochtopf nach einem der Ansprüche 14 bis 16, **dadurch gekennzeichnet, dass** das in umgekehrter Stellung auf dem Sockel (8"') angeordnete Garelement (3"') auf der Reisschale (100) anliegt.

18. Dampfkochtopf nach einem der Ansprüche 1 bis 17, **dadurch gekennzeichnet, dass** das Basisteil (1 ; 1"') Greiforgane (70 ; 70"') aufweist.

## Claims

1. A steam cooker including a cooking element (3; 3'; 3"; 3''') having a peripheral side wall (35; 35'; 35"; 35"') and designed to be placed on a stand (8; 8'; 8"; 8"') that comprises a steam-generator base (1; 1'; 1"; 1"') optionally underlying a juice-collector receptacle (2; 2"; 2"'), and/or optionally underlying a cooking support (9), it being possible for the cooking element (3; 3'; 3"; 3"') to be disposed in the upside down position on the stand (8; 8'; 8"; 8"'), said steam cooker being **characterized in that** the peripheral side wall (35; 35'; 35"; 35"') surrounds the stand (8, 8'; 8"; 8"') at least in part.

2. A steam cooker according to claim 1, **characterized in that** the cooking element (3; 3') has a bottom (30; 30') that rests on the stand (8; 8') when the cooking element (3; 3') is disposed in the upside down position on said stand (8; 8').

3. A steam cooker according to claim 1 or claim 2, **characterized in that** it further includes at least one other cooking element (4, 5; 4'; 5'; 4"'; 5"') having a peripheral side wall (45, 55; 45', 55'; 45"', 55"'), the cooking elements (3, 4, 5; 3', 4', 5'; 3"', 4"', 5"') nesting together.

4. A steam cooker according to claim 3, **characterized in that** it has at least two cooking elements (3, 4, 5; 3', 4', 5'; 3"', 4"', 5"') that can be arranged in a manner such that they are superposed on the stand (8; 8'; 8"'), and **in that** said at least two cooking elements (3, 4, 5; 3', 4', 5'; 3"', 4"', 5"') can also be stacked in the upside down position on the stand (8; 8'; 8"'), the peripheral side walls (35, 45, 55; 35', 45', 55'; 35"', 45"'; 55"') then surrounding the stand (8 ; 8'; 8"') at least in part.

5. A steam cooker according to any one of claims 1 to 4, **characterized in that** it includes a lid (6; 6'; 6"; 6"') designed to close that cooking element (5; 5'; 3"; 5"') which is furthest away from the stand (8; 8'; 8"; 8"'), the lid (6; 6'; 6"; 6"') having a skirt (60) suitable for surrounding the bottom portion of the peripheral side wall (55) of said cooking element (5) disposed in the upside down position.

6. A steam cooker according to claim 5, **characterized in that** the skirt (60) bears against the bottom portion of the peripheral side wall (55) of said cooking element (5) disposed in the upside down position.

7. A steam cooker according to any one of claims 1 to 6, **characterized in that** the juice-collector receptacle (2; 2"; 2"') is provided with side setbacks (17; 17"; 17"') designed to facilitate taking hold of it.

8. A steam cooker according to any one of claims 1 to 7, **characterized in that** handle members (32, 42, 52) are disposed on the top portion(s) of the cooking element(s) (3, 4, 5).

9. A steam cooker according to any one of claims 1 to 8, **characterized in that** the stand (8; 8"; 8"') is provided with a retractable filler device (7; 7"; 7"').

10. A steam cooker according to claim 9, **characterized in that** the retractable filler device (7; 7"; 7"') is arranged under the juice-collector receptacle (2; 2"; 2"').

11. A steam cooker according to claim 10, **characterized in that** the retractable filler device (7; 7"') is arranged under the raised portion (28; 28"') of the bottom (20; 20"') of the juice-collector receptacle (2; 2"').

12. A steam cooker according to claim 10 or claim 11, **characterized in that** the retractable filler device (7; 7"') comprises a tray (26; 26"') arranged under the bottom (20; 20"') of the juice-collector receptacle (2; 2"').

13. A steam cooker according to claim 12, **characterized in that** the tray (26; 26"') is pivotally mounted under the bottom (20; 20"') of the juice-collector receptacle (2; 2"') to pivot about a pin (27).

14. A steam cooker according to any one of claims 1 to 13, **characterized in that** an outer annular side wall (25"') of the stand (8"') surrounds a rice bowl (100) disposed in the upside down position on the stand (8"').

15. A steam cooker according to claim 14, **characterized in that** an outer annular side wall (25"') of the stand (8"') surrounds a rice bowl (100) as disposed in the upside down position on the stand (8"'), and **in that** the rice bowl (100) is provided with a handle (103) received above the raised portion (28"') of the bottom (20"') of the juice-collector receptacle (2"').

16. A steam cooker according to claim 15, **characterized in that** the handle (103) is integral with a side face (105) of the rice bowl (100), said side face (105) being curved towards the inside of the rice bowl (100).

17. A steam cooker according to any one of claims 14 to 16, **characterized in that** the cooking element (3"') disposed in the upside down position on the stand (8''') rests on the rice bowl (100).

18. A steam cooker according to any one of claims 1 to 17, **characterized in that** the base (1; 1") is provided with handle members (70; 70"').
